# EUROPÄISCHE PATENTANMELDUNG

(11) **EP 1 777 448 A2**
(43) Veröffentlichungstag der Anmeldung: **25.04.2007**
(21) Anmeldenummer: 06076870.2
(22) Anmeldetag: 12.10.2006
(51) Int. Cl.: F16L 5/04

(54) **Feuerstoppmanschette**

(30) Priorität: 21.10.2005 NL 1030243
(71) Anmelder: J. van Walraven Holding B.V., 3641 RK Mijdrecht (NL)
(72) Erfinder: Van Walraven, Jan, 3641 GP Mijdrecht (NL)
(74) Vertreter: Houben, Christiaan Hein Willem Frans

(57) **Zusammenfassung**

Die Erfindung bezieht sich auf eine Feuerstoppmanschette (1) für eine gebogene Leitung (60,61). Die Manschette umfasst intumeszierendes Material, das bei Erhitzung infolge eines Feuers eine abschließende Wirkung für die Leitungsdurchführung (51) durch eine Wand oder einen Fußboden (50) hat.

Die Manschette weist zumindest zwei im Wesentlichen hülsenförmige Manschettenteile (3) mit einem intumeszierenden Material auf, um zumindest zwei in einem Winkel stehende Leitungsteile zu umhüllen. Zumindest eines, jedoch vorzugsweise jedes der Manschettenteile besitzt eine schräge Stirnfläche (21,31). Bei der Installation sind die Manschettenteile mit den Stirnflächen aneinander positionierbar, um die in einem Winkel stehenden Leitungsteile zu umhüllen.

## Beschreibung

Die Erfindung bezieht sich auf eine Feuerstoppmanschette für eine gebogene Leitung, welche Manschette intumeszierendes Material umfasst, das bei Erhitzung infolge eines Feuers eine abschließende Wirkung für die Leitungsdurchführung durch eine Wand oder einen Fußboden besitzt.

Eine derartige Feuerstoppmanschette ist bekannt. Der EP 635 665 ist zu entnehmen, dass eine Leitung an der Stelle einer Deckendurchführung eine Biegung aufweisen kann. Die bekannte Feuerstoppmanschette hat einen oberen Teil, der sich im Wesentlichen senkrecht zu der Deckenfläche erstreckt. Im oberen Teil ist an der Innenseite ein schalldämpfendes Material in mehreren Schichten angeordnet. Weiter gibt es ein sich schräg nach unten erstreckendes unteres Manschettenteil. Dieses zweite Manschettenteil weist einen Mantel auf, der an der Innenseite mit einer Schicht eines intumeszierenden Materials versehen ist.

Der Erfindung liegt die Aufgabe zugrunde, eine Feuerstoppmanschette der eingangs genannten Art zu schaffen, die eine höhere Gewährleistung gegen die Verbreitung von Hitze, Rauch und/oder Flammen bietet.

Diese Aufgabe wird erfindungsgemäß mittels einer im Anspruch 1 beschriebenen Feuerstoppmanschette gelöst.

Bei der erfindungsgemäßen Feuerstoppmanschette weist die Manschette zumindest zwei im Wesentlichen hülsenförmige Manschettenteile auf, welche jeweils mit einem intumeszierenden Material versehen sind. Die Manschettenteile umhüllen jeweils eines der in einem Winkel stehenden Leitungsteile. Zumindest eines der Manschettenteile besitzt eine schräge Stirnfläche, so dass bei den Installationsarbeiten die Manschettenteile mit den Stirnflächen aneinander positionierbar sind, damit aneinander anschließend die in einem Winkel stehenden Leitungsteile umhüllt werden können.

Die Manschette ist im installierten Zustand an der Innenseite mit einem intumeszierenden Material versehen. Intumeszierendes Material ist allgemein bekannt aus dem Stand der Technik und quillt bei Erhitzung zu einem Vielfachen des ursprünglichen Volumens auf. Im Brandfall wird die Leitungsdurchführung mit dem aufquellenden intumeszierenden Material ausgefüllt. Im Falle einer Metallleitung bedeutet dies, dass der Raum zwischen dem Mantel und der Leitung völlig ausgefüllt wird. Im Falle einer Kunststoffleitung könnte die Leitung sogar von dem aufquellenden Material zugedrückt werden. Durch die erfindungsgemäßen Maßnahmen wird gewährleistet, dass eine feuerbeständige Barriere gegen einen Brand entsteht, der sich an jeder der Seiten der Wand oder der Decke/des Fußbodens befinden kann.

Es ist möglich, dass die Manschette über die gesamte Innenfläche mit intumeszierendem Material verkleidet ist. Auch ist eine Variante denkbar, bei der an der Innenfläche Streifen eines intumeszierenden Materials angeordnet sind, die sich vorzugsweise quer zur axialen Richtung entlang dem Innenumfang der jeweiligen Manschettenteile erstrecken. Bei einer weiteren Ausbildung können Streifen aus unterschiedlichem Material angewendet werden, die bei unterschiedlichen Temperaturen in Betrieb gesetzt werden.

Vorzugweise weist jedes der Manschettenteile eine schräge Stirnfläche auf, welche schräge Stirnflächen bei der Installation aneinander positioniert sind. Am günstigsten ist es, wenn die schräge Stirnfläche jedes Manschettenteils den gleichen Winkel zu der Mittelachse des betreffenden Manschettenteils bildet, wodurch erreicht wird, dass die schrägen Stirnflächen exakt aufeinander passen.

Bei einer bevorzugten Ausführungsform sind die Manschettenteile an einer Seite um ein Gelenk drehbar miteinander verbunden.

Die Manschettenteile können getrennt voneinander hergestellt sein, jedoch können sie auch einstückig geformt sein.

Bei einer weiteren bevorzugten Ausführungsform bilden die Manschettenteile vor Gebrauch einen geraden hülsenförmigen Körper, in dem, ab der Seite gesehen, vorzugsweise ein V-förmiger Einschnitt vorgesehen ist, wodurch die Manschettenteile in einem Winkel zueinander gebogen werden können.

Bei wiederum einer weiteren bevorzugten Ausbildung ist der Einschnitt von einem vor Gebrauch entfernbaren Manschettenteil ausgefüllt, das vorzugsweise mittels Perforationslinien mit den anderen Manschettenteilen verbunden ist.

In der Praxis wird das Biegen einer Leitung meistens von einem oder mehreren Bogenstücken oder dergleichen bewerkstelligt werden, die zwischen geraden Leitungsteilen angeordnet werden. Dadurch wird insbesondere bei Rohrbögen oft eine Verbindung zwischen Leitungsteilen mit einem um die Leitung angeordneten Kupplungsstück vorhanden sein. Es kann sich dabei zum Beispiel um eine Schweißmuffe, eine Klemmkupplung, eine Muffe für eine Leimverbindung oder jede andere Art von Kupplungsstück handeln.

Gemäß einem anderen Aspekt der Erfindung ist eine Feuerstoppmanschette dazu ausgelegt, eine mittels eines Kupplungsstücks bewerkstelligte Verbindung zwischen Leitungsteilen zu umhüllen.

Bei einer insbesondere bevorzugten Ausführungsform ist an der Innenseite der Manschette ein Hohlraum zum Aufnehmen von herausragenden Teilen eines Kupplungsstücks vorhanden, wobei der Hohlraum als ein sich in axiale Richtung erstreckender Kanal gebildet ist, der vorzugsweise einen U-förmigen Querschnitt aufweist.

Vorzugsweise besitzt die Manschette eine angeformte Ausstülpung, die sich in axiale Richtung erstreckt und die den Kanal begrenzt.

Die Erfindung wird nachfolgend anhand der bevorzugten Ausführungsformen unter Bezugnahme auf die Zeichnung näher erläutert werden, in der:
- Fig. 1: eine perspektivische Ansicht einer bevorzugten Ausführungsform einer erfindungsgemäßen Feuerstoppmanschette zeigt,
- Fig. 2: eine Draufsicht auf die Feuerstoppmanschette der Fig. 1 zeigt,
- Fig. 3: eine Vorderansicht der Feuerstoppmanschette der Fig. 1 zeigt,
- Fig. 4: eine Seitenansicht der Feuerstoppmanschette der Fig. 1 zeigt,
- Fig. 5a und 5b: in einer Seitenansicht, bzw. perspektivischen Ansicht eine installierte Feuerstoppmanschette der Fig. 1 zeigt,
- Fig. 6a und 6b: in einer Seitenansicht, bzw. perspektivischen Ansicht die Feuerstoppmanschette der Fig. 1 in montiertem Zustand in einer anderen Installationsmöglichkeit zeigt,
- Fig. 7: in Perspektive eine andere bevorzugte Ausführungsform der erfindungsgemäßen Feuerstoppmanschette mit einem entfernbaren Manschettenteil zeigt,
- Fig. 8: die Feuerstoppmanschette der Fig. 7 zeigt, wobei das entfernbare Manschettenteil entfernt wurde, und
- Fig. 9: die Feuerstoppmanschette der Fig. 7 zeigt, wobei ein anderes Manschettenteil entfernt wurde.

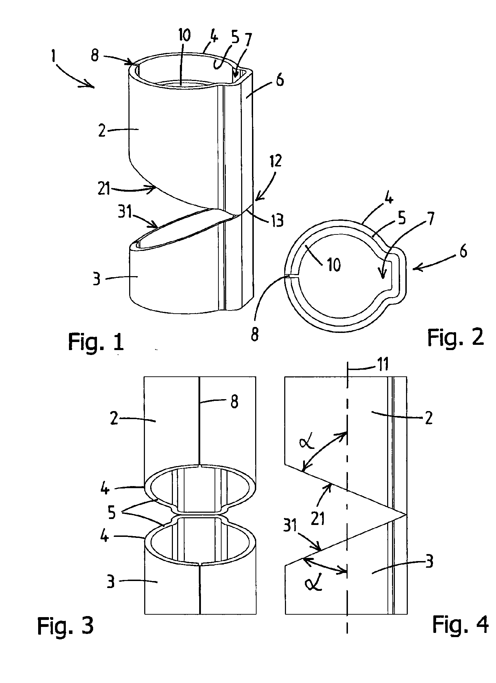

In Fig. 1 bis 4 ist in unterschiedlichen Ansichten eine Feuerstoppmanschette 1 gezeigt. Die Manschette 1 umfasst ein erstes hülsenförmiges Manschettenteil 2 und ein zweites hülsenförmiges Manschettenteil 3. Die Manschettenteile 2 und 3 weisen jeweils einen verhältnismäßig dünnen Außenmantel 4 aus Metall, insbesondere aus Metallplatte, oder Blech auf. Gegebenenfalls könnte dies auch eine Folie sein. An der Innenseite des Außenmantels 4 ist eine Schicht 5 eines intumeszierenden Materials angeordnet.

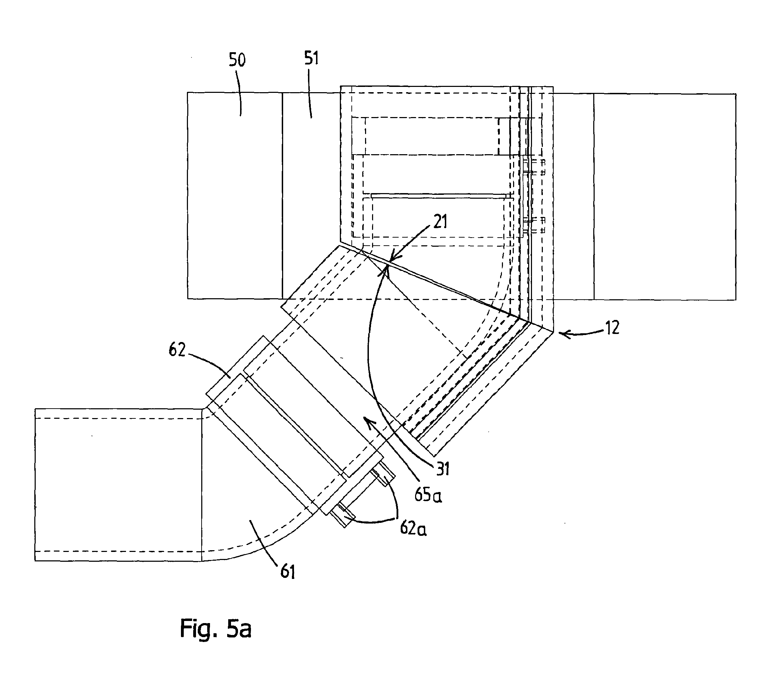

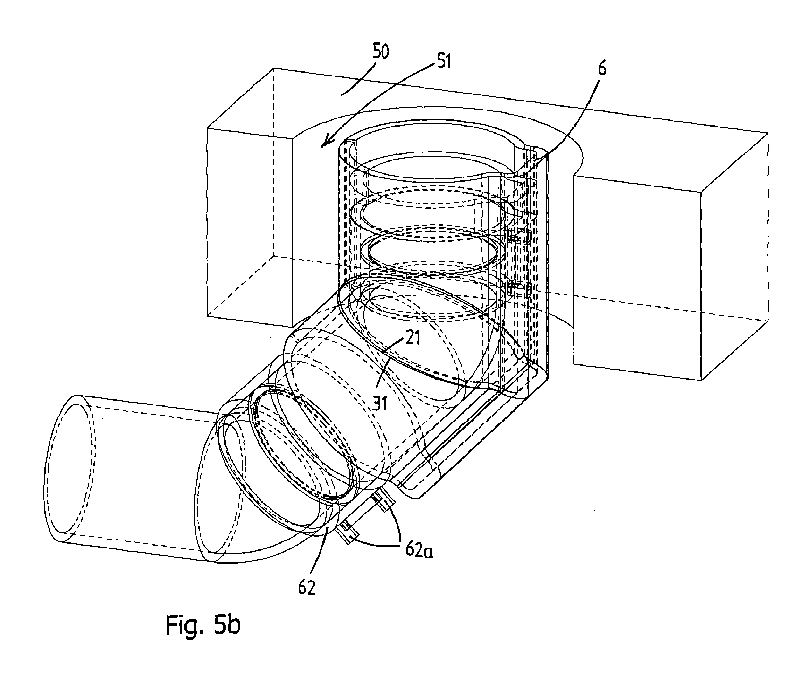

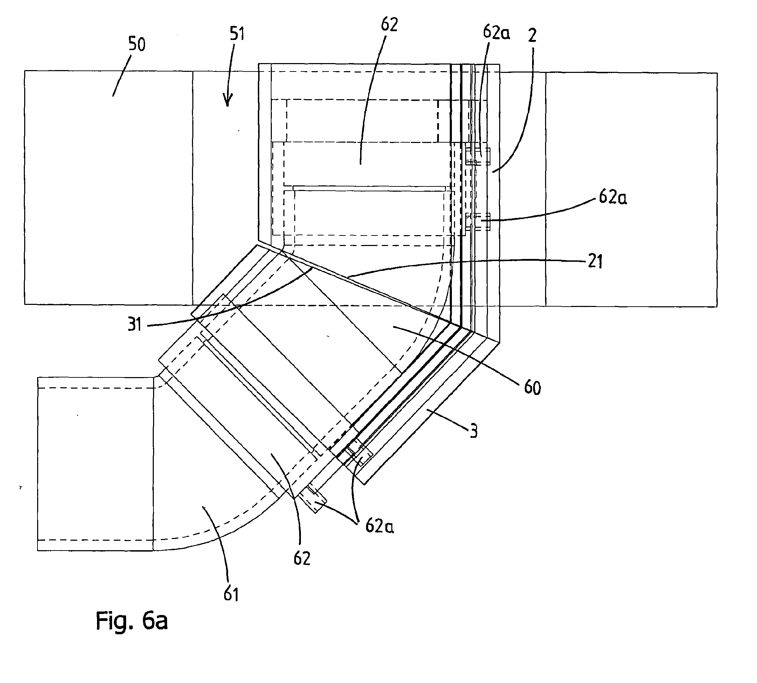

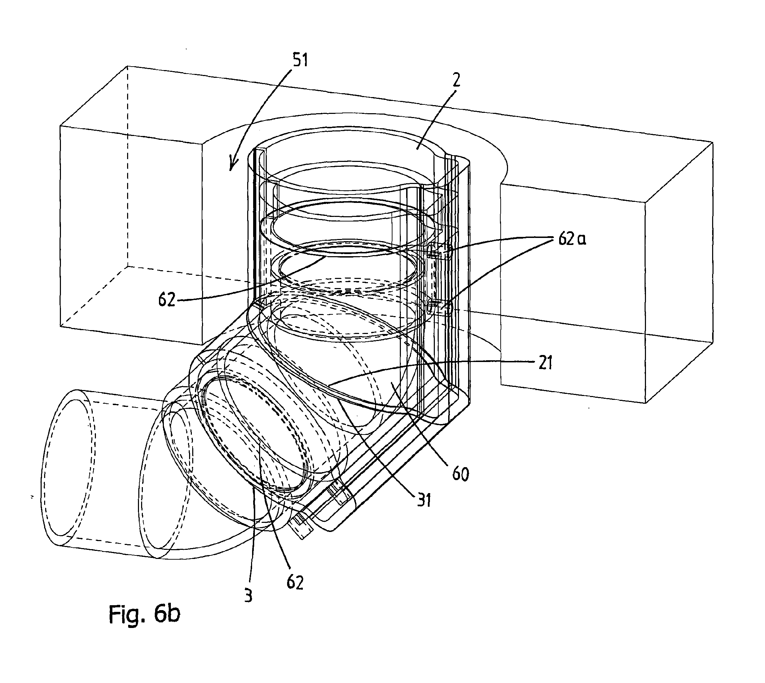

Die Manschettenteile 2, bzw. 3 besitzen jeweils eine schräge Stirnfläche 21, bzw. 31. Die Feuerstoppmanschette 1 ist dazu ausgelegt, ein sich zumindest teilweise durch die Durchführung 51 in einer Wand oder Decke 50 erstreckendes Bogenstück einer Leitung zu umhüllen, wie in Fig. 5 und 6 gezeigt ist. In Fig. 6a und 6b ist ersichtlich, dass die Manschette 1 mit den Manschettenteilen 2 und 3 um ein Bogenstück 60 angeordnet ist. Die Manschettenteile 2 und 3 besitzen vorzugsweise eine solche Länge, dass sie jeweils mit ihrem der schrägen Stirnfläche gegenüberliegenden Ende aus der Wand oder der Decke 50 herausragen (siehe Fig. 5a und Fig. 6a). Die Manschettenteile 2 und 3 können eine unterschiedliche Länge besitzen, wie in Fig. 1-6 gezeigt ist.

Die Manschette 1 wird in der Durchführung 51 mittels Zement oder dergleichen arretiert. Daneben, oder statt dessen, ist es möglich, aus der Leitungsdurchführung in der Wand oder der Decke herausragende Teile der Manschettenteile 2, 3, 72, 73 an der Wand oder der Decke mittels zum Beispiel separaten oder fest an den Manschettenteilen befestigten Klammern zu befestigen, die um die Manschettenteile herum angeordnet sind und mit Schrauben an der Wand oder der Deckenfläche festgesetzt werden. Auch andere Befestigungsmittel sind jedoch denkbar.

Die schrägen Stirnflächen 21, bzw. 31 der Manschettenteile 2, bzw. 3, sind bei der Installation aneinander positionierbar, um imstande zu sein, die Manschettenteile 2 und 3 in einen Winkel zu stellen und die in einem Winkel stehenden Leitungsteile zu umhüllen, wie ersichtlich in Fig. 5 und 6. Die schrägen Stirnflächen 21, bzw. 31 der Manschettenteile 2, bzw. 3 bilden in dem gezeigten Beispiel einen Winkel α von etwa 68° zu der Mittelachse 11 des betreffenden Manschettenteils 2, 3, wie ersichtlich in Fig. 4. Der Winkel α könnte jedoch auch kleiner sein und liegt vorzugsweise zwischen 40-80°.

Obwohl dies am idealsten wäre, ist es nicht notwendig, dass die Manschettenteile 2 und 3 in montiertem Zustand einen solchen Winkel zueinander bilden, dass die schrägen Stirnflächen 21 und 31 in montiertem Zustand eng aneinander liegen. Bei Leitungsteilen, die einen etwas größeren Winkel zueinander bilden als der, auf welchen die Schräge der schrägen Stirnflächen 21 und 31 eingestellt ist, ist es möglich, dass eine Spalte zwischen den Stirnflächen 21 und 31 offen bleibt. Da die Leitungsteile in der Nähe des Bogens weiter völlig von intumeszierendem Material umhüllt sind, wird dennoch eine gute Brandschutzwirkung gewährleistet. Die Manschette 1 ist dadurch weitgehend anwendbar.

In der hier beschriebenen bevorzugten Ausführungsform stehen die schrägen Stirnflächen 21 und 31 der beiden Manschettenteile 2 und 3 in einem gleichen Winkel α zu der Mittelachse 11. Dies hat den Vorteil, dass die Stirnflächen, wie oben beschrieben, exakt aneinander passen. Es ist aber auch denkbar, dass die Stirnflächen der beiden Manschettenteile in einem unterschiedlichen Winkel zu der Mittelachse stehen. Es ist sogar denkbar, dass ein Manschettenteil eine schräge Stirnfläche hat und ein anderes Manschettenteil mit einer senkrecht zu der Mittelachse stehenden Stirnfläche an diese herangestellt wird.

Die Manschettenteile 2 und 3 können separat als Einzelteile hergestellt sein und einzeln über die zu umhüllenden Rohrteile angeordnet werden, diese sind jedoch vorzugsweise einstückig hergestellt und an einer Seite an der in Fig. 1 mit der Ziffer 12 angedeuteten Stelle miteinander verbunden. Vor Gebrauch liegen die Manschettenteile 2 und 3 in einer Linie und bilden einen im Wesentlichen geraden hülsenförmigen Körper, in dem, ab der Seite gesehen, ein V-förmigen Einschnitt vorgesehen ist, wie die Fig. 4 am deutlichsten zeigt. Die Manschettenteile 2 und 3 sind relativ zueinander um ein Gelenk drehbar um die Gelenklinie 13, so dass die Stirnflächen 21 und 31 der jeweiligen Manschettenteile 2 und 3 in dem in Fig. 5 und 6 dargestellten Stand aufeinander zubewegt werden können. Die Drehung um ein Gelenk ist durch die Biegsamkeit des Mantels 4 möglich. Die Einteiligkeit der Manschette 1 ist im Hinblick auf die Montage vorteilhaft. Die Orientierung der Manschettenteile 2 und 3 um ihre Mittelachse ist dadurch, dass sie verbunden sind, automatisch korrekt. Die schrägen Stirnflächen sind also immer in der richtigen Weise relativ zueinander positioniert und können passend aneinander anschließen, weil die Manschettenteile 2, 3 ab einer einzigen Seite der Wand, oder Decke in die Durchführung über die Leitung geschoben werden.

Die Manschettenteile 2 und 3 sind als Biegeteile gestaltet, die durch das Rundbiegen einer mit einem intumeszierenden Material verkleideten Metallplatte geformt sind. Durch diese Herstellungsweise entsteht an einer Seite eine sich in axiale Richtung erstreckende Naht 8 (siehe Fig. 1 bis 3). Bei der Naht sind Verschlussmittel (nicht gezeigt) vorgesehen, um die Manschette um die Leitung geschlossen zu halten. Es können zum Beispiel, wie an sich aus dem Stand der Technik bekannt, an einer Seite der Naht 8 Langlöcher (nicht gezeigt) in dem Mantel angeordnet sein und an der anderen Seite können Biegelaschen vorgesehen sein, die durch die Langlöcher gezogen und anschließend umgebogen werden können, um das Schließen zustande zu bringen. Selbstverständlich sind auch andere Verschlussmittel anwendbar.

In Fig. 5a und 5b ist eine Installationsweise gezeigt, bei der das Bogenstück 60 an der Unterseite mittels eines Kupplungsstücks, insbesondere einer Schweißmuffe 62, mit einem weiteren Leitungsteil 61 gekoppelt ist, das im gezeigten Beispiel auch ein Bogenstück ist, jedoch auch eine andere Form aufweisen kann. Die Schweißmuffe 62 wird über die jeweiligen Enden der beiden Leitungsteile 60 und 61 angeordnet und anschließend mittels Elektroden 62a, 62 an eine nicht gezeigte Stromquelle angeschlossen. Hierdurch wird die Schweißmuffe 62 erhitzt und mit dem Bogenstück 60 und dem Leitungsteil 61 verschweißt. An dem oberen Ende des Bogenstücks 60 ist auch eine Schweißmuffe 62 angeordnet, mit der das Bogenstück 60 in analoger Weise mit einem von oben kommenden Leitungsteil (nicht gezeigt) verbunden werden kann. Statt Schweißmuffen (62) könnten auch andere Kupplungsstücke angewendet werden.

Wie in Fig. 6a und 6b ersichtlich, ist das obere Kupplungsstück, in diesem Fall eine Schweißmuffe, völlig in der Manschette 1 eingelagert. Das obere Kupplungsstück, in diesem Fall auch eine Schweißmuffe 62, ist teilweise in der Manschette 1 angeordnet. In der Variante der Fig. 5a und 5b ist ein anderes Bogenstück mit einem längeren unteren Teil 65a angewendet, wodurch nur eine obere Schweißmuffe 62 (nicht sichtbar) in der Manschette 1 angeordnet ist und sich die untere Schweißmuffe 62 völlig außerhalb der Manschette 1 befindet.

Die Manschettenteile 2 und 3 haben in dem gezeigten Ausführungsbeispiel einen im Wesentlichen kreisförmigen Querschnitt mit einem solchen inneren Durchmesser, dass darin ein Rohrteil mit um dieses Rohrteil herum die ringförmige Schweißmuffe 62 angeordnet werden können. Diametral der Naht 8 gegenüberliegend haben die Manschettenteile 2 und 3 eine angeformte Ausstülpung 6. Diese Ausstülpung 6 begrenzt einen sich in axiale Richtung erstreckenden Kanal 7 mit vorzugsweise einem im Wesentlichen U-förmigen Querschnitt zum Aufnehmen der gegenüber dem ringförmigen Teil der Schweißmuffe 62 herausragenden Elektroden 62a. Im Falle eines Kupplungsstücks eines unterschiedlichen Typs können in dem Kanal Schrauben, Bolzen, Muttern, Verbindungslaschen oder andere herausragende Elemente angeordnet werden.

Bemerkt wird, dass, obwohl dies in der Praxis oft der Fall sein wird, die Leitungsteile nicht immer mittels Kupplungsstücken miteinander verbunden werden. So können Metallleitungen zum Beispiel auch verlötet oder verschweißt werden. Bei der Erfindung ist auch eine Feuerstoppmanschette für derartige Leitungen vorgesehen.

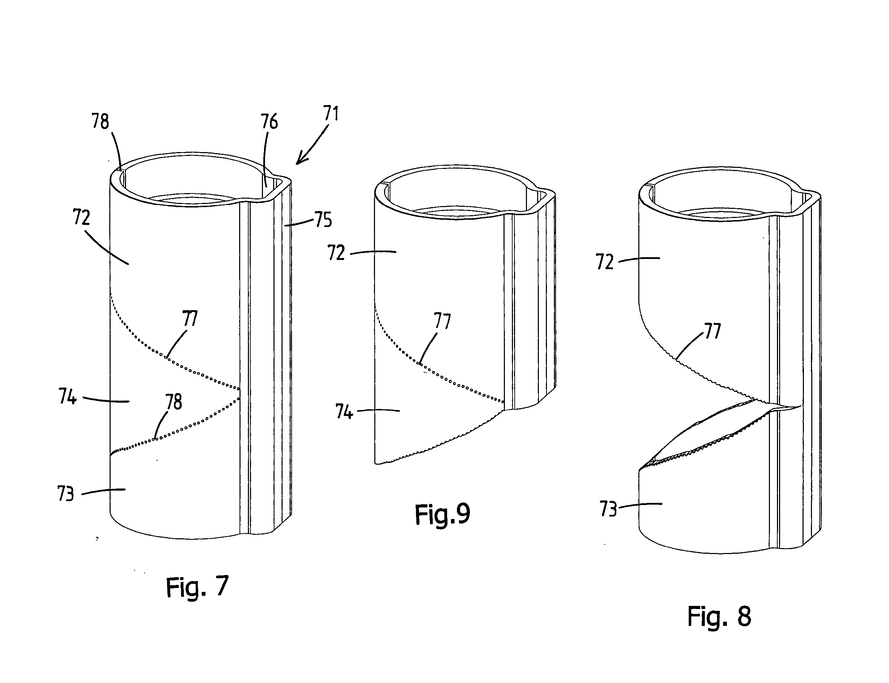

In Fig. 7 ist eine Variante der Feuerstoppmanschette gezeigt, die als Manschette für gerade Leitungsteile, aber auch für gebogene Leitungsteile anwendbar ist. Die Manschette 71 umfasst Manschettenteile 72 und 73 und ein sich dazwischen befindendes entfernbares Manschettenteil 74. Die Manschette 71 ist im gezeigten Beispiel aus einem vollständig mit intumeszierendem Material verkleideten Blech geformt. Als Alternative könnte das intumeszierende Material auch in Streifen, die sich im Wesentlichen senkrecht zu der Mittelachse der jeweiligen Manschettenteile erstrecken, auf dem Blech angeordnet sein. Das verkleidete Blech hat eine Naht 78, wo die Kanten der umgebogenen Platte zusammenkommen und mittels bereits genannten Verschlussmitteln zusammengehalten werden können, nachdem die Manschettenteile um die Leitungsteile angeordnet wurden. Die Manschette 71 weist, sowie die eher gezeigte Variante, diametral der Naht gegenüber, eine Ausstülpung 75, die einen Kanal 76 für herausragende Teile eines Kupplungselements aufnehmen kann. Die Manschettenteile 72 und 73 sind wie bei der eher beschriebenen Ausführungsform an einer Seite an der Ausstülpung 75 miteinander verbunden. Vor Gebrauch bilden die Manschettenteile 72, 73 und 74 einen geraden hülsenförmigen Körper, wie ersichtlich in Fig. 7, wobei sie durch sich ab der Ausstülpung 76 in Umfangsrichtung schräg erstreckende Perforationslinien 77 und 78 getrennt sind. Die Perforationslinien nähern sich an beiden Seiten der Ausstülpung 75 und divergieren dann bis an die der Ausstülpung gegenüberliegenden axialen Naht 78 am Umfang.

Um eine Feuerstoppmanschette für ein Bogenstück zu erhalten, kann das Manschettenteil 74 entfernt werden. Die sich ergebende Manschette mit Manschettenteilen 72 und 73 ist mit der der Fig. 1 bis 4 vergleichbar.

Um eine Feuerstoppmanschette für eine gerade Leitung zu erhalten, kann die Manschette gemäß Fig. 7, oder für eine kürzere Leitungsdurchführung durch eine Wand, die gemäß Fig. 9 angewendet werden, in welchem letzten Fall das Manschettenteil 73 entfernt wird.

Vorzugsweise sind in der Feuerstoppmanschette 1 ein oder mehrere Elemente eines schalldämpfenden Materials angeordnet. In Fig. 1 und Fig. 2 ist ein Streifen 10 eines schalldämpfenden Materials ersichtlich, der an der Innenseite der intumeszenten Verkleidungsschicht 5 des Manschettenteils 2 angeordnet ist. Es können mehrere von derartigen Streifen 10 in jedem der Manschettenteile 2 und 3 angeordnet sein. Derartige Streifen dienen dazu, Geräusche durch die Durchführung zu dämpfen, jedoch können diese auch einer Luftströmung und Rauch durch die Manschette 1 entgegentreten.

## Patentansprüche

1. Feuerstoppmanschette für eine gebogene Leitung, welche Manschette intumeszierendes Material umfasst, das bei Erhitzung infolge eines Feuers eine abschließende Wirkung für die Leitungsdurchführung durch eine Wand oder einen Fußboden besitzt, **dadurch gekennzeichnet, dass** die Manschette zumindest zwei im Wesentlichen hülsenförmige Manschettenteile mit einem intumeszierenden Material aufweist, um zumindest zwei in einem Winkel stehende Leitungsteile zu umhüllen, wobei zumindest eines der Manschettenteile eine schräge Stirnfläche aufweist, welche schräge Stirnfläche bei der Installation an die Stirnfläche des anderen Manschettenteils positionierbar ist, um die in einem Winkel stehenden Leitungsteile zu umhüllen.

2. Feuerstoppmanschette nach Anspruch 1, bei der jedes der Manschettenteile eine schräge Stirnfläche besitzt, welche schräge Stirnflächen bei der Installation aneinander positionierbar sind.

3. Feuerstoppmanschette nach Anspruch 2, bei der die schräge Stirnfläche jedes Manschettenteils den gleichen Winkel zu der Mittelachse des betreffenden Manschettenteils bildet.

4. Feuerstoppmanschette nach einem oder mehreren der vorhergehenden Ansprüche, bei der die schräge Stirnfläche einen Winkel von 40 - 80° zu der Mittelachse des betreffenden Manschettenteils bildet.

5. Feuerstoppmanschette nach einem oder mehreren der vorhergehenden Ansprüche, bei der die Manschettenteile an einer Seite um ein Gelenk drehbar relativ zueinander verbunden sind.

6. Feuerstoppmanschette nach einem oder mehreren der vorhergehenden Ansprüche, bei der die Feuerstoppmanschette dazu ausgelegt ist, ein um die Leitung angeordnetes Kupplungsstück, zum Beispiel eine Schweißmuffe, oder Klemmkupplung, zu umhüllen.

7. Feuerstoppmanschette nach Anspruch 6, bei der an der Innenseite der Manschette ein Hohlraum zum Aufnehmen von herausragenden Teilen des Kupplungsstücks vorhanden ist.

8. Feuerstoppmanschette nach Anspruch 7, bei der der Hohlraum als ein sich in axiale Richtung erstreckender Kanal gebildet ist, der vorzugsweise einen U-förmigen Querschnitt aufweist.

9. Feuerstoppmanschette nach Anspruch 8, bei der die Manschette eine angeformte Ausstülpung besitzt, die sich in axiale Richtung erstreckt, und die den Kanal begrenzt.

10. Feuerstoppmanschette nach Anspruch 8 oder 9, bei der die Manschettenteile an der Seite des Kanals miteinander verbunden sind.

11. Feuerstoppmanschette nach einem oder mehreren der vorhergehenden Ansprüche, bei der die Manschettenteile aus einem Stück gebildet sind.

12. Feuerstoppmanschette nach Anspruch 11, bei der die Manschettenteile vor Gebrauch einen geraden hülsenförmigen Körper bilden, in dem, ab der Seite gesehen, ein V-förmiger Einschnitt vorgesehen ist, wodurch die Manschettenteile in einem Winkel zueinander gebogen werden können.

13. Feuerstoppmanschette nach Anspruch 12, bei der der Einschnitt von einem vor Gebrauch entfernbaren Wandteil ausgefüllt ist, das vorzugsweise mittels Perforationslinien mit den jeweiligen Manschettenteilen verbunden ist.

14. Feuerstoppmanschette für eine Leitung, welche Manschette intumeszierendes Material umfasst, das bei Erhitzung infolge eines Feuers eine abschließende Wirkung für die Leitungsdurchführung durch eine Wand oder einen Fußboden besitzt, **dadurch gekennzeichnet, dass** die Feuerstoppmanschette dazu ausgelegt ist, eine mittels eines Kupplungsstücks bewerkstelligte Verbindung zwischen Leitungsteilen zu umhüllen.

15. Feuerstoppmanschette nach Anspruch 14, bei der an der Innenseite der Manschette ein Hohlraum zum Aufnehmen von herausragenden Teilen des Kupplungsstücks vorhanden ist.

16. Feuerstoppmanschette nach Anspruch 15, bei der der Hohlraum als ein sich in axiale Richtung erstreckender Kanal gebildet ist, der vorzugsweise einen U-förmigen Querschnitt aufweist.

17. Feuerstoppmanschette nach Anspruch 16, bei der die Manschette eine angeformte Ausstülpung besitzt, die sich in axiale Richtung erstreckt, und die den Kanal begrenzt.

18. Feuerstoppmanschette nach einem oder mehreren der vorhergehenden Ansprüche, wobei die Manschette einen Außenmantel aus Metall, insbesondere Blech oder Folie umfasst, wobei an der Innenseite des Außenmantels intumeszierendes Material angeordnet ist.

19. Feuerstoppmanschette nach Anspruch 18, bei der das intumeszierende Material als eine Schicht, die die Innenseite des Außenmantels verkleidet, angeordnet ist.

20. Feuerstoppmanschette nach einem oder mehreren der vorhergehenden Ansprüche, bei der das intumeszierende Material in Streifen an der Innenseite des Außenmantels angeordnet ist.

21. Feuerstoppmanschette nach einem oder mehreren der vorhergehenden Ansprüche, bei der in der Manschette schalldämpfende, vorzugsweise ringförmige, Elemente angeordnet sind.
